# EUROPEAN PATENT SPECIFICATION

(11) **EP 2 997 618 B1**
(45) Date of publication and mention of the grant of the patent: **01.11.2017**
(21) Application number: 14731328.2
(22) Date of filing: 14.05.2014
(51) Int. Cl.: H01M 8/04014, H01M 8/0656, H01M 8/04029, H01M 8/04089, H01M 8/04082, H01M 8/1018

(54) **COOLING SYSTEM FOR FUEL CELLS**
KÜHLSYSTEM FÜR BRENNSTOFFZELLEN
SYSTÈME DE REFROIDISSEMENT POUR DES PILES À COMBUSTIBLE

(30) Priority: 15.05.2013 GB 201308710
(43) Date of publication of application: 23.03.2016
(73) Proprietor: Intelligent Energy Limited, Leicestershire LE11 3GB (GB)
(72) Inventor: HOOD, Peter David, Loughborough LE11 3GB (GB)
(74) Representative: Ahmad, Sheikh Shakeel
(86) International application number: PCT/GB2014/051474
(87) International publication number: WO 2014/184549

(56) References cited:
- US-A1- 2011 157 813
- US-A1- 2011 174 468

## Description

The present invention relates to electrochemical fuel cells and in particular to cooling systems for such fuel cells, particularly though not exclusively when the fuel cells are disposed in a stack formation.

Conventional electrochemical fuel cells convert fuel and oxidant, generally both in the form of gaseous streams, into electrical energy and a reaction product. A common type of electrochemical fuel cell for reacting hydrogen and oxygen comprises a polymeric ion transfer membrane, also known as a proton exchange membrane (PEM), within a membrane-electrode assembly (MEA), with fuel and air being passed over respective sides of the membrane. Protons (i.e. hydrogen ions) are conducted through the membrane, balanced by electrons conducted through a circuit connecting the anode and cathode of the fuel cell. To increase the available voltage, a stack may be formed comprising a number of series-connected MEAs arranged with separate anode and cathode fluid flow paths. Such a stack is typically in the form of a block comprising numerous individual fuel cell plates held together by end plates at either end of the stack.

Because the reaction of fuel and oxidant generates heat as well as electrical power, a fuel cell stack requires cooling once an operating temperature has been reached. Cooling may be achieved by forcing air through the cathode fluid flow paths. In an open cathode stack, the oxidant flow path and the coolant path are the same, i.e. forcing air through the stack both supplies oxidant to the cathodes and cools the stack.

Open cathode, air-cooled PEM fuel cell stacks typically deploy motor-driven axial, centrifugal or tangential fans to provide the cathode air flow requirement. These fans are by their very nature bulky and tend to deliver turbulent air flow to a fuel cell stack. To avoid localised hot spots in the fuel cells where air flow through the stack may be reduced, it is preferred to present a well-distributed air flow to an inlet face of the stack. One approach to providing a well-distributed air flow is to use a carefully designed air plenum to interface between an axial, centrifugal or tangential motor-driven fan and an inlet or outlet face of the fuel cell stack, so as to provide laminar or near-laminar flow at the inlet or outlet face of the fuel cell stack. Such plenums are also by their very nature bulky and space constraints may well force compromises in their effectiveness in generating the required laminar flow.

US 2011/0174468 describes ion wind fans for cooling, e.g. integrated circuits. To mitigate generation of ozone by the fan, a heatsink coated with ozone catalyst is proposed. US 2011/0157813 describes a flow tube apparatus with electrodes therein to generate an ionic wind for cooling electronic apparatus.

It is an object of the present invention to provide an improved technique for providing cooling air flow to a fuel cell stack.

According to one aspect, the present invention provides a fuel cell assembly comprising:
a fuel cell having a membrane electrode assembly disposed between an anode fluid flow plate and a cathode fluid flow plate, the cathode flow plate defining a flow channel for conveying oxidant to the membrane electrode assembly, the flow channel having an inlet and an outlet;
a plasma discharge fan configured to generate air flow into said inlet,
wherein a plurality of said fuel cells are configured in a stack arrangement (1), the inlets for the plurality of fuel cells in the stack forming an air inlet face (4) of the fuel cell stack,
wherein the plasma discharge fan (20) comprises a plate structure disposed over the stack air inlet face (4) or the stack air outlet face (5).

The plasma discharge fan may be configured to generate both air flow and ozone flow into the inlet. The plate structure of the plasma discharge fan may be configured to deliver a generally uniform air flow into the stack air inlet face over substantially its entire area. The plate structure may comprise a first grid of electrically conductive members proximal to a first face of the plate structure and a second grid of electrically conductive members proximal to a second face of the plate structure. The plate structure of the plasma discharge fan may comprise a network of air flow guides disposed between the first grid of electrically conductive members and the second grid of electrically conductive members. The plate structure of the plasma discharge fan may comprise a frame having a leading edge in sealing engagement with the air inlet face of the fuel cell stack. The frame may support a first grid of electrically conductive members and a second grid of electrically conductive members separated from the first grid, the first and second grids being configured to respectively provide a downstream grid of electrodes and an upstream grid of electrodes for generating air flow therebetween. The plasma discharge fan may be further configured to provide an auxiliary supply of ozone-rich gas to a water cooling flow path or to a fuel supply line of the fuel cell. The area of the plasma discharge fan may be divided into a plurality of separately controllable zones. The fuel cell assembly may include a controller configured to drive the plasma discharge fan with a pulse width modulation signal to vary air flow therethrough.

According to another aspect, the present invention provides a method of cooling a fuel cell stack having a plurality of fuel cells configured in a stack arrangement, each fuel cell having a membrane electrode assembly disposed between an anode fluid flow plate and a cathode fluid flow plate, the cathode flow plate defining a flow channel for conveying oxidant to the membrane electrode assembly, the flow channel having an inlet and an outlet, the inlets for the plurality of fuel cells in the stack forming an air inlet face of the fuel cell stack and the method comprising:
deploying a plasma discharge fan to generate air flow into said inlet, the plasma discharge fan comprising a plate structure disposed over the stack air inlet face or the stack air outlet face.

Embodiments of the present invention will now be described by way of example and with reference to the accompanying drawings in which:
Figure 1 shows a perspective view of a fuel cell stack, cooling air fan and plenum assembly for conventional air flow cooling of the stack;
Figure 2 shows a schematic perspective view of a plasma discharge fan element for use with a fuel cell stack; and
Figure 3 shows a schematic perspective view of the plasma discharge fan of figure 2 mounted to a fuel cell stack.

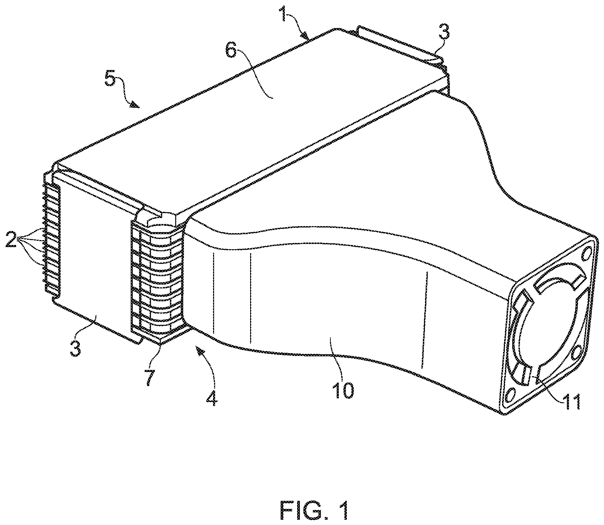

With reference to figure 1, there is shown a fuel cell stack 1 comprising a number of fuel cells 2 disposed in a stack configuration and maintained in compression by end clips 3 at each side of the fuel cell stack. The end clips 3 engage with a top end plate 6 and a bottom end plate 7. The front face 4 and rear face 5 of the stack 1 define an inlet face and an outlet face respectively for passage of air through the stack and over the cathodes of each cell in the stack. The inlet face 4 is coupled to a plenum housing 10 which incorporates a motor-driven fan 11 of the axial variety. The axial fan 11 generates an air flow through the plenum housing 10 and thereby through the fuel cell stack 1. The plenum housing 10 is shaped to distribute the air flow from the axial fan 10 as evenly as possible to the entire inlet surface of the stack in the front face 4. As discussed previously, the axial fan 11 and the plenum housing 10 occupy a significant amount of space and it can be difficult to achieve optimum laminar flow to the inlet surface of the stack given space constraints and the turbulence inherently generated by conventional motor-driven axial, centrifugal or tangential fans.

Various flow correction structures may be required, e.g. providing differing plenum volumes and shapes or structures internal to the plenum housing 10 to promote a uniform and laminar air flow delivery across the entire cathode inlet face of the fuel cell stack 1. These corrections can be critical in providing correct cooling and oxidant air flow to each cell in the stack thereby maintaining equal cell voltages and avoiding localised hot spots within the stack or within individual cells. Providing air flow correction structures within the plenum housings adds further bulk to the system and may also rely on forcing localised pressure drops through mechanical restrictions, which increases parasitic losses of the system, e.g. by increased current consumption of the motor-driven fan 11 to overcome greater resistance to air flow.

Recently, it has been proposed to use miniature solid-state fans to cool electronic components such as microprocessors. Such solid-state fans use the principle of plasma discharge, or corona discharge, to generate a localised air flow, or "corona wind". Such solid-state fans may also be known as ionic wind pumps or electrostatic fluid accelerators.

In a plasma discharge fan, an electrical discharge is effected by the ionization of a fluid (e.g. air) surrounding a conductor that is electrically charged. The discharge will occur when the electric field strength around the conductor is sufficiently high to form a conductive region, but not sufficiently high to cause an electrical breakdown or arcing to nearby objects.

In air, the high electric field created at the tip of a first electrode causes oxygen and nitrogen molecules in the air to become positively charged and create a corona. These travel to a second electrode (which could be a grounded electrode) colliding with neutral air molecules on the way. Momentum is transferred from the ionized gas molecules to neutral air molecules and a general movement of air towards the second electrode results.

In the present invention, it has been recognised that a plasma discharge fan can be designed and adapted specifically for use with fuel cells in such a way as to provide several significant advantages over conventional motor-driven fans for air cooling of fuel cells and fuel cell stacks.

Plasma discharge fans can produce relatively large amounts of ozone (O₃) as a byproduct. Ozone can be harmful beyond a certain concentration and in use of a plasma discharge fan, ozone production generally would have to be controlled or limited. However, in the case of fuel cells as described above, a platinum catalyst is typically provided on the cathode electrode of the MEA and requires oxygen to complete the electrochemical reaction that drives protons across the PEM. Greater oxygen concentration provides a greater electrochemical reaction and therefore a larger possible electrical output from the fuel cell. The production of significant quantities of ozone in this instance is not disadvantageous nor a safety hazard since the presence of ozone enhances the reaction at the platinum catalyst and is safely converted back to oxygen (O₂) over the platinum catalyst.

A further advantage of a plasma discharge fan adapted for use with a fuel cell stack is that the shape and configuration of the plasma-generating electrode or electrodes can be designed to match the large area of an input face of the fuel cell stack and thereby provide a highly efficient laminar flow of cooling air directly to the entire input face of the fuel cell stack. The use of a plenum as described in connection with figure 1 can thereby be completely avoided or at least substantially reduced in volume.

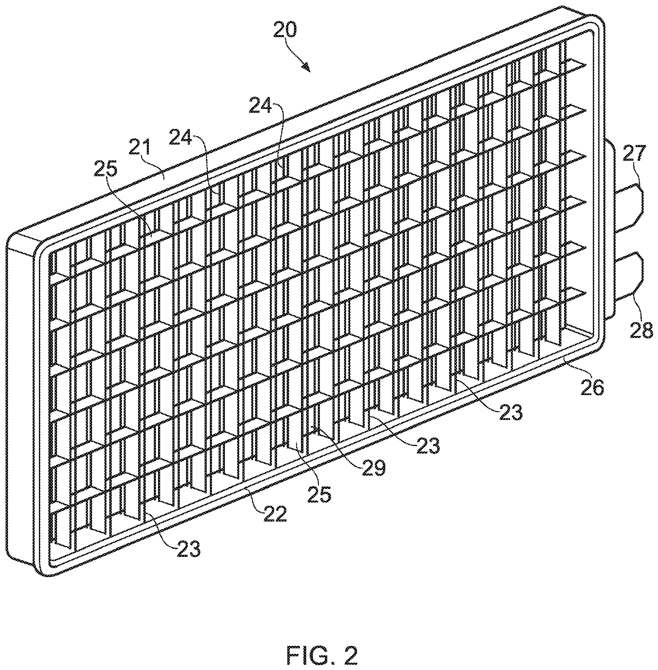

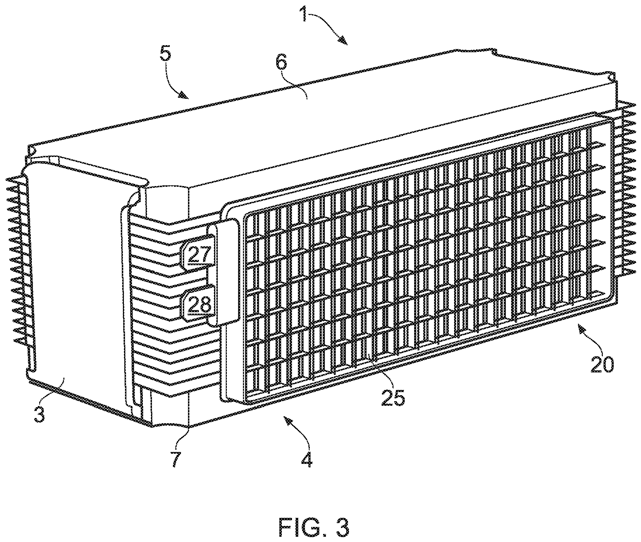

Figure 2 shows a perspective view of a plasma discharge fan 20 configured for use with a fuel cell stack 1. The plasma discharge fan comprises a rectangular frame 21 supporting a first grid of electrically conductive wires 23 and a second grid of electrically conductive wires 24, a network of air flow guides 25 and a sealing member 26 on a leading edge 22 of the frame 21. The sealing member 26 is preferably an elastic gasket which forms a compression seal against the front face 4 of a fuel cell stack 1 as shown in figure 3. A pair of electrical terminals 27, 28 are provided at one end to establish electrical connection respectively to the first grid of electrically conductive wires 23 and the second grid of electrically conductive wires 24. The electrical terminals 27, 28 may be of the "spade"-type as shown.

In the arrangement shown in figure 2, the first grid of electrically conductive wires 23 is the "downstream" grid of electrodes and may therefore comprise a negatively charged electrode. The second grid of conductive wires 24 is the "upstream" grid of electrodes and may therefore comprise a positively charged electrode. The positively charged (upstream) electrode is used to ionise the air molecules (nitrogen and oxygen) by stripping electrons therefrom. The positively charged air molecules are thus attracted towards the downstream electrodes, colliding with and conveying neutral air molecules in the same direction.

The grids of electrodes can take any suitable form to match the geometry of the fuel cell to which the plasma discharge fan is to be attached. Thus, in the example shown, the grids each comprise a series of parallel conductive wires forming a rectangular array extending over a planar area that matches the input face of the fuel cell stack. This is best seen in figure 3, where the plasma discharge fan 20 is mounted to the front face 4 of the fuel cell stack 1, extending over the entire rectangular area of the input face. The network of air flow guides 25 preferably forms a rectangular grid of air passages 29 so as to guide the air flow generated by the grids of electrodes 23, 24 into the cathode fluid flow paths of the fuel cell stack 1.

Because the electrode grids and the air flow guides 25 can form many small air passages 29 of suitable geometry directly in front of the fuel cell stack air inlet face, a highly laminar flow can be generated directly into the air inlet face. Thus, the plasma discharge fan 20 may be close coupled or directly coupled to the fuel cell stack air inlet face. Further, the spacing of the air flow guides 25 can if desired be matched to and aligned with repeating structures in the air inlet face, such as the layered structure of the fuel cells and the spacing of air flow channels within the planar structure of each fuel cell in the stack.

Thus, it can be seen that the plasma discharge fan of figures 2 and 3 generally exemplifies a grid plate structure which can be disposed over a stack air inlet and is generally configured to deliver a generally uniform air flow into the stack air inlet over substantially its entire surface area. The plate structure can be profiled to match any size and shape of stack air inlet face.

The use of a plasma discharge fan 20 mounted to a fuel cell stack as shown in figure 3 offers a number of substantive benefits. Fuel cell stack cathode cooling is satisfied with the "corona wind" provided by the plasma discharge fan, while the ozone rich air flow to the cathode electrode excites the electrochemical reaction and provides a performance boost to the fuel cell as the ozone is converted back to diatomic oxygen, O₂, or reacts with the protons crossing the PEM to form H₂O. The safe conversion of ozone back to O₂ as it passes over the cathode platinum catalyst, or reaction to form H₂O within the fuel cell stack ensures that the overall ozone content in the fuel cell stack cathode exhaust is at acceptable safety levels.

The uniform air distribution that is possible from the plasma discharge fan 20, closely matched to the geometry of the fuel cell stack 1 promotes cell balance and removes or minimises the need for plenums and plenum housings 10 and other potentially bulky or inefficient air correction components within the plenum housings.

The compact proportions of the plasma discharge fan 20 allow a much smaller system package and hence fuel cell applications in smaller consumer products. In an exemplary arrangement, the fan may have a depth (thickness) of 4 mm. The plasma discharge fan has no mechanically moving parts and thus offers improvements by way of lower noise levels, extended service life and lower power consumption than many motor-driven fans. The presence of ozone in the cooling air flow may also assist fuel cell performance in providing a continuing dose of sterilant to the cathode flow channels to avoid build up of bacteria in the warm and humid conditions often found in fuel cells that are routinely cycled on and off. This may reduce or eliminate the requirement for periodic shut-down and sterilisation of a fuel cell.

The plasma discharge fan 20 may also be configured to provide an auxiliary supply of ozone-rich gas to other parts of the fuel cell. For example, where water cooling is used, e.g. in either a separate water cooling circuit not forming part of the anode or cathode flow path of the fuel cell, or by water injected directly into the anode or cathode flow paths of the fuel cell stack, a stream of ozone-rich air flow may be directed through the water supply to dissolve ozone into the water supply. This can also serve for sterilisation purposes to avoid build-up of bacteria in the flow channels of the fuel cell stack.

In a further application, the plasma discharge fan may be configured to provide an auxiliary supply of ozone-rich gas to the anode fuel feed of the fuel cell stack. Where the anode fuel is hydrogen fed from an upstream fuel reforming cell, there may be undesirably high levels of carbon monoxide (CO) present in the fuel gas stream, possibly higher than the standard level of purity of ≤ 0.2 ppm CO in H₂ required for many applications. A portion of the ozone-rich gas flow provided by the plasma discharge fan can also be bled as an auxiliary supply into the fuel cell stack supply line to react with any CO thereby converting it to CO₂. Reaction with the H₂ may also serve to provide a humidified H₂ flow which can be advantageous for hydration of the PEM.

To provide an auxiliary supply of ozone-rich gas to other parts of the fuel cell stack, the plate arrangement of the plasma discharge fan could be formed somewhat larger in area than the air inlet face of the fuel cell stack, and an additional plenum behind the plasma discharge fan outside the area of the air inlet face used to direct the ozone-rich gas to the other parts. If additional positive pressure is required beyond that supplied by the plasma discharge fan, this can be achieved with an additional fan or pump, e.g. a micro-positive displacement or diaphragm pump.

Various other configurations of plasma discharge fan and fuel cell stack are possible. For example, although the arrangement of figure 3 shows the plasma discharge fan disposed upstream of the fuel cell stack to provide both air flow and ozone into the cathode flow channels of the fuel cell stack, if ozone generation is not required for the cathode catalyst reaction, the plasma discharge fan could be provided downstream of the fuel cell stack, i.e. positioned on the rear (outlet) face 5 of the fuel cell stack to "pull" ambient air flow through the fuel cell stack. The plasma discharge fan could also be provided in combination with a variable recirculation flow path for the air to pass multiple times through the fuel cell stack. Such arrangements can be advantageous in providing a fast warm-up phase of the fuel cell stack, or to provide a controllable level of ozone, or a controllable level of humidity, by varying the proportion of air recirculated.

Where an ozone-rich air flow is used through the fuel cell stack, the sealing member or gasket 26, together with any relevant gasket materials used within the fuel cell stack itself, may be provided in a suitable elastic material that is resistant to attack by ozone.

Because the plasma discharge fan need have no moving parts, various air flow control options can readily be achieved. For example, the plasma discharge fan can be arranged in separate electrically controllable zones so that air flow to different parts of the air inlet face of the fuel cell stack can be controlled independently of one another. In this way, air flow to certain parts of the stack can be locally increased, decreased or shut off independent of air flow to other parts of the stack. Each separately controllable zone may correspond to one or more whole cells in the stack or may correspond to part of one or more cells in the stack. In another example, the plasma discharge fan may include a controller to apply intermittent air flow control, e.g. by applying pulse width modulation to the plasma discharge so as to vary air flow through the stack or parts of the stack on a pulse with modulated basis.

Other embodiments are intentionally within the scope of the accompanying claims.

## Claims

1. A fuel cell assembly (1) comprising:
a fuel cell (2) having a membrane electrode assembly disposed between an anode fluid flow plate and a cathode fluid flow plate, the cathode flow plate defining a flow channel for conveying oxidant to the membrane electrode assembly, the flow channel having an inlet and an outlet;
a plasma discharge fan (20) configured to generate air flow into said inlet,
wherein a plurality of said fuel cells are configured in a stack arrangement (1), the inlets for the plurality of fuel cells in the stack forming an air inlet face (4) of the fuel cell stack,
wherein the plasma discharge fan (20) comprises a plate structure disposed over the stack air inlet face (4) or the stack air outlet face (5).

2. The fuel cell assembly of claim 1 in which the plasma discharge fan (20) is configured to generate both air flow and ozone flow into the inlet.

3. The fuel cell assembly of claim 1 in which the plate structure of the plasma discharge fan (20) is configured to deliver a generally uniform air flow into the stack air inlet face (4) over substantially its entire area.

4. The fuel cell assembly of claim 1 in which the plate structure of the plasma discharge fan (20) comprises a first grid of electrically conductive members (23) proximal to a first face of the plate structure and a second grid of electrically conductive members (24) proximal to a second face of the plate structure.

5. The fuel cell assembly of claim 4 in which the plate structure of the plasma discharge fan (20) further comprises a network of air flow guides (25) disposed between the first grid of electrically conductive members (23) and the second grid of electrically conductive members (24).

6. The fuel cell assembly of claim 1 in which the plate structure of the plasma discharge fan (20) comprises a frame (21) having a leading edge in sealing engagement with the air inlet face (4) of the fuel cell stack.

7. The fuel cell assembly of claim 6 in which the frame (21) supports a first grid of electrically conductive members (23) and a second grid of electrically conductive members (24) separated from the first grid, the first and second grids being configured to respectively provide a downstream grid of electrodes and an upstream grid of electrodes for generating air flow therebetween.

8. The fuel cell assembly of claim 1 in which the plasma discharge fan (20) is further configured to provide an auxiliary supply of ozone-rich gas to a water cooling flow path or to a fuel supply line of the fuel cell.

9. The fuel cell assembly of claim 1 in which the area of the plasma discharge fan (20) is divided into a plurality of separately controllable zones.

10. The fuel cell assembly of claim 1 further including a controller configured to drive the plasma discharge fan (20) with a pulse width modulation signal to vary air flow therethrough.

11. A method of cooling a fuel cell stack having a plurality of fuel cells configured in a stack arrangement (1),
each fuel cell having a membrane electrode assembly disposed between an anode fluid flow plate and a cathode fluid flow plate, the cathode flow plate defining a flow channel for conveying oxidant to the membrane electrode assembly, the flow channel having an inlet and an outlet,
the inlets for the plurality of fuel cells in the stack forming an air inlet face (4) of the fuel cell stack (1) and the method comprising:
deploying a plasma discharge fan (20) to generate air flow into said inlet, the plasma discharge fan (20) comprising a plate structure disposed over the stack air inlet face (4) or the stack air outlet face (5).

## Patentansprüche

1. Eine Brennstoffzellenanordnung (1), umfassend:
eine Brennstoffzelle (2) mit einer Membran-Elektrodenanordnung, die zwischen einer Anodenplatte für Flüssigkeitsströmung und einer Kathodenplatte für Flüssigkeitsströmung angeordnet ist, wobei die Kathoden-Strömungsplatte einen Strömungskanal zum Transportieren von Oxidationsmittel zur Membran-Elektrodenanordnung definiert, wobei der Strömungskanal einen Einlass und einen Auslass aufweist;
einen Lüfter für Plasmaentladung zum Erzeugen von Luftströmung in den Einlass,
wobei eine Vielzahl der Brennstoffzellen in einer Stapelanordnung (1) konfiguriert sind, wobei die Einlässe für die Vielzahl von Brennstoffzellen im Stapel eine Lufteinlassfläche 4) des Brennstoffzellenstapels bilden,
wobei der Lüfter (20) für Plasmaentladung eine Plattenstruktur umfasst, die über der Stapel-Lufteinlassfläche (4) oder der Stapel-Luftauslassfläche (5) angeordnet ist.

2. Die Brennstoffzellenanordnung nach Anspruch 1, bei welcher der Lüfter (20) für Plasmaentladung konfiguriert ist, sowohl Luftströmung als auch Ozonströmung in den Einlass zu erzeugen.

3. Die Brennstoffzellenanordnung nach Anspruch 1, bei welcher die Plattenstruktur des Lüfters (20) für Plasmaentladung konfiguriert ist, eine generell gleichmäßige Luftströmung in die Stapel-Lufteinlassfläche (4) im Wesentlichen über ihren ganzen Bereich zu liefern.

4. Die Brennstoffzellenanordnung nach Anspruch 1, bei welcher die Plattenstruktur des Lüfters (20) für Plasmaentladung ein erstes Gitter von elektrisch leitfähigen Elementen (23) nahe einer ersten Fläche der Plattenstruktur und ein zweites Gitter von elektrisch leitfähigen Elementen (24) nahe einer zweiten Fläche der Plattenstruktur umfasst.

5. Die Brennstoffzelle nach Anspruch 4, bei welcher die Plattenstruktur des Lüfters (20) für Plasmaentladung ferner ein Netzwerk von Luftströmungsführungen (25) aufweist, die zwischen dem ersten Gitter elektrisch leitfähiger Elemente (23) und dem zweiten Gitter elektrisch leitfähiger Elemente (24) angeordnet sind.

6. Die Brennstoffzellenanordnung nach Anspruch 1, bei welcher die Plattenstruktur des Lüfters (20) für Plasmaentladung einen Rahmen (21) umfasst, der eine führende Kante in abdichtender Verbindung mit der Lufteinlassfläche (4) des Brennstoffzellenstapels aufweist.

7. Die Brennstoffzellenanordnung nach Anspruch 6, bei welcher der Rahmen (21) ein erstes Gitter elektrisch leitfähiger Elemente (23) und ein zweites Gitter elektrisch leitfähiger Elemente (24) stütz, das vom ersten Gitter getrennt ist, wobei die ersten und zweiten Gitter konfiguriert sind, um jeweils eine stromabwärts gelegenes Gitter von Elektroden und ein stromaufwärts gelegenes Gitter von Elektroden zur Erzeugung von Luftströmung dazwischen bereitzustellen.

8. Die Brennstoffzellenanordnung nach Anspruch 1, bei welcher der Lüfter (20) für Plasmaentladung ferner konfiguriert ist, eine Hilfsversorgung von ozonreichem Gas zu einem Wasserkühlungs-Strömungsweg oder zu einer Brennstoffversorgungsleitung der Brennstoffzelle bereitzustellen.

9. Die Brennstoffzellenanordnung nach Anspruch 1, bei welcher der Bereich des Lüfters (20) für Plasmaentladung in eine Vielzahl von getrennt regelbaren Zonen geteilt ist.

10. Die Brennstoffzellenanordnung nach Anspruch 1, die ferner eine Steuereinheit einschließt, die konfiguriert ist, den Lüfter (20) für Plasmaentladung mit einem Signal für Impulsbreitenmodulation anzutreiben, um die Luftströmung dort hindurch zu variierten.

11. Ein Verfahren zur Kühlung eines Brennstoffzellenstapels, der eine Vielzahl von Brennstoffzellen aufweist, die in einer Stapelanordnung (1) konfiguriert sind,
wobei jede Brennstoffzelle eine Membran-Elektrodenanordnung aufweist, die zwischen einer Anodenplatte für Flüssigkeitsströmung und einer Kathodenplatte für Flüssigkeitsströmung angeordnet ist, wobei die Kathoden-Strömungsplatte einen Strömungskanal zum Transportieren von Oxidationsmittel zur Membran-Elektrodenanordnung definiert, wobei der Strömungskanal einen Einlass und einen Auslass aufweist,
wobei die Eingänge für die Vielzahl von Brennstoffzellen im Stapel eine Lufteinlassfläche (4) des Brennstoffzellenstapels (1) bilden und das Verfahren umfasst:
Verwendung eines Lüfters (20) für Plasmaentladung zum Erzeugen von Luftströmung in den Einlass, wobei der Lüfter (20) für Plasmaentladung eine Plattenstruktur umfasst, die über der Stapel-Lufteinlassftäche (4) oder der Stapel-Luftauslassfläche (5) angeordnet ist.

## Revendications

1. Ensemble pile à combustible (1) comprenant :
une pile à combustible (2) avec un assemblage membrane-électrode placé entre une plaque d'écoulement de fluide d'anode et une plaque d'écoulement de fluide de cathode, la plaque d'écoulement de cathode définissant un canal d'écoulement destiné à transporter un oxydant vers l'assemblage membrane-électrode, le canal d'écoulement comportant un orifice d'entrée et un orifice de sortie ;
un ventilateur à décharge de plasma (20) conçu pour générer un flux d'air dans ledit orifice d'entrée,
dans lequel une pluralité desdites piles de combustible est agencée sous forme d'un empilement (1), les orifices d'entrée pour la pluralité de piles à combustible dans l'empilement formant une face d'orifices d'entrée d'air (4) de l'empilement de piles à combustible,
dans lequel le ventilateur à décharge de plasma (20) comprend une structure de plaque placée par-dessus la face d'orifices d'entrée d'air (4) de l'empilement ou la face d'orifices de sortie d'air (5) de l'empilement.

2. Ensemble pile à combustible selon la revendication 1, dans lequel le ventilateur à décharge de plasma (20) est conçu pour générer à la fois un flux d'air et un flux d'ozone dans l'orifice d'entrée.

3. Ensemble pile à combustible selon la revendication 1, dans lequel la structure de plaque du ventilateur à décharge de plasma (20) est conçue pour transmettre un flux d'air généralement uniforme dans la face d'orifices d'entrée d'air (4) sur sensiblement toute sa surface.

4. Ensemble pile à combustible selon la revendication 1, dans lequel la structure de plaque du ventilateur à décharge de plasma (20) comprend une première grille d'éléments électroconducteurs (23) proximale à une première face de la structure de plaque et une seconde grille d'éléments électroconducteurs (24) proximale à une seconde face de la structure de plaque.

5. Ensemble pile à combustible selon la revendication 4, dans lequel la structure de plaque du ventilateur à décharge de plasma (20) comprend en outre un réseau de guides de flux d'air (25) placé entre la première grille d'éléments électroconducteurs (23) et la seconde grille d'éléments électroconducteurs (24).

6. Ensemble pile à combustible selon la revendication 1, dans lequel la structure de plaque du ventilateur à décharge de plasma (20) comprend un bâti (21) avec un bord d'attaque en prise hermétique avec la face d'orifices d'entrée d'air (4) de l'empilement de piles à combustible.

7. Ensemble pile à combustible selon la revendication 6, dans lequel le bâti (21) supporte une première grille d'éléments électroconducteurs (23) et une seconde grille d'éléments électroconducteurs (24) séparée de la première grille, les première et seconde grilles étant conçues pour procurer respectivement une grille d'électrodes en aval et une grille d'électrodes en amont pour générer un flux d'air entre les deux.

8. Ensemble pile à combustible selon la revendication 1, dans lequel le ventilateur à décharge de plasma (20) est en outre conçu pour procurer une alimentation auxiliaire de gaz riche en ozone à un trajet d'un circuit de refroidissement d'eau ou à une ligne d'alimentation de combustible de la pile à combustible.

9. Ensemble pile à combustible selon la revendication 1, dans lequel la surface du ventilateur à décharge de plasma (20) est divisée en une pluralité de zones régulées séparément.

10. Ensemble pile à combustible selon la revendication 1, comprenant en outre un contrôleur conçu pour entraîner le ventilateur à décharge de plasma (20) avec un signal de modulation d'impulsions en durée pour varier le flux d'air qui le traverse.

11. Procédé de refroidissement d'un empilement de piles à combustible ayant une pluralité de piles à combustible dans un agencement en pile (1),
chaque pile à combustible avec un assemblage membrane-électrode étant placé entre une plaque d'écoulement de fluide d'anode et une plaque d'écoulement de fluide de cathode, la plaque d'écoulement de cathode définissant un canal d'écoulement destiné à transporter un oxydant vers l'assemblage membrane-électrode, le canal d'écoulement comportant un orifice d'entrée et un orifice de sortie,
les orifices d'entrée pour la pluralité de piles à combustible dans l'empilement formant une face d'orifices d'entrée d'air (4) de l'empilement de piles à combustible (1) et le procédé comprenant :
le déploiement d'un ventilateur à décharge de plasma (20) pour générer un flux d'air dans ledit orifice d'entrée, le ventilateur à décharge de plasma (20) comprenant une structure de plaque placée par-dessus la face d'orifices d'entrée d'air (4) de l'empilement ou la face d'orifices de sortie d'air (5) de l'empilement.
